# EUROPEAN PATENT APPLICATION

(11) **EP 4 683 062 A1**
(43) Date of publication of application: **21.01.2026**
(21) Application number: 23952010.9
(22) Date of filing: 01.11.2023
(51) Int. Cl.: H01M 50/184, H01M 50/188

(54) **END COVER ASSEMBLY, END COVER, BATTERY CELL, BATTERY, AND ELECTRIC DEVICE**

(30) Priority: 13.09.2023 CN 202322481663 U
(71) Applicant: Contemporary Amperex Technology Co., Limited, Ningde, Fujian 352100 (CN)
(72) Inventor: SU, Huasheng, Ningde, Fujian 352100 (CN); YANG, Rui, Ningde, Fujian 352100 (CN); ZHENG, Yulian, Ningde, Fujian 352100 (CN); LI, Can, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2023/129063
(87) International publication number: WO 2025/055085

(57) **Abstract**

The present application discloses an end cover assembly, an end cover, a battery cell, a battery, and an electric device. The end cover assembly comprises an end cover, electrode terminals and insulating members. Mounting holes are formed in the end cover. The electrode terminals are mounted in the mounting holes. The insulating members are at least partially arranged between the electrode terminals and the end cover, so as to insulate and isolate the electrode terminals from the end cover. The end cover and/or the electrode terminals are provided with first limiting parts; the insulating members are provided with second limiting parts; and the first limiting parts are snap-fitted to the second limiting parts to limit rotation of the insulating members relative to the end cover and/or the electrode terminals. In this way, the risk of rotation of the insulating members relative to the end cover can be reduced, the sealing performance between the insulating members and the end cover is improved, the sealing performance between the insulating members and the electrode terminals is improved, the risk of leakage of an electrolyte is reduced, and the reliability of the battery cell is improved.

## Description

### CROSS-REFERENCE TO RELATED APPLICATIONS

The present application claims priority to Chinese Patent Application No. 202322481663.7, entitled "END COVER ASSEMBLY, END COVER, BATTERY CELL, BATTERY, AND ELECTRIC DEVICE" and filed on September 13, 2023, which is incorporated herein by reference in its entirety.

### TECHNICAL FIELD

The present application relates to the field of batteries, and specifically, to an end cover assembly, an end cover, a battery cell, a battery, and an electric device.

### BACKGROUND

A battery cell has advantages of a small volume, a high energy density, a high power density, a large number of cyclical usage times, and long storage time, and is widely used in some electronic devices, electric traffic tools, electric toys, and electric devices.

With continuous development of technologies, a higher requirement is proposed on performance of the battery cell, and how to improve reliability of the battery cell becomes an urgent problem to be resolved.

### SUMMARY

Embodiments of the present application provide an end cover assembly, an end cover, a battery cell, a battery, and an electric device, to improve reliability of the battery cell.

According to a first aspect, an embodiment of the present application provides an end cover assembly. The end cover assembly includes an end cover, an electrode terminal, and an insulating member, where the end cover is provided with a mounting hole; and the electrode terminal is mounted in the mounting hole, the insulating member is at least partially located in the mounting hole, and the insulating member is at least partially arranged between the electrode terminal and the end cover, to insulate and isolate the electrode terminal from the end cover. The end cover and/or the electrode terminal are provided with a first limiting portion, the insulating member is provided with a second limiting portion, and the first limiting portion and the second limiting portion cooperate with each other to limit rotation of the insulating member relative to the end cover and/or the electrode terminal.

In the foregoing technical solution, the first limiting portion is arranged on the end cover and/or the electrode terminal, and the second limiting portion is arranged on the insulating member, so that rotation of the insulating member relative to the end cover and/or the electrode terminal can be limited, sealing performance between the insulating member and the end cover can be improved, sealing performance between the insulating member and the electrode terminal can be improved, a leakage risk of an electrolyte solution can be reduced, and reliability of a battery cell can be improved.

In some embodiments, at least a part of one of the first limiting portion and the second limiting portion is a limiting protrusion, and at least a part of the other is a limiting groove.

In the foregoing technical solution, the first limiting portion and the second limiting portion cooperate with each other in the form of a limiting protrusion and a limiting groove, so that a structure is simple, and production and manufacturing are facilitated.

In some embodiments, the first limiting portion is a limiting protrusion, and the second limiting portion is a limiting groove.

In the foregoing technical solution, a limiting protrusion is arranged on the end cover and/or the electrode terminal, so that rotation of the insulating member can be limited, and structural strengths of the end cover and/or the electrode terminal can be enhanced.

In some embodiments, the first limiting portion is arranged on the end cover.

In the foregoing technical solution, rotation of the insulating member is limited through cooperation between the first limiting portion on the end cover and the second limiting portion on the insulating member.

In some embodiments, the first limiting portion is arranged on an outer surface of the end cover.

In the foregoing technical solution, compared with arranging the first limiting portion at another position of the end cover, arranging the first limiting portion on the outer surface of the end cover can facilitate processing and forming of the first limiting portion, and can reduce impact of the first limiting portion on an internal structure of the battery cell.

In some embodiments, the limiting protrusion includes an annular protrusion arranged around the mounting hole, and the annular protrusion is a non-rotary body.

In the foregoing technical solution, the annular protrusion is set to a non-rotary body, so that rotation of the insulating member can be more effectively limited.

In some embodiments, the annular protrusion is a rectangular ring, a diamond ring, a triangular ring, or an elliptical ring.

In the foregoing technical solution, the annular protrusion is a rectangular ring, a diamond ring, a triangular ring, or an elliptical ring, and these shapes are conducive to limiting rotation of the insulating member and conducive to controlling manufacturing precision during production.

In some embodiments, the limiting protrusion includes an annular protrusion arranged around the mounting hole, the annular protrusion is a rotary body, and a central axis of the rotary body is not collinear with a central axis of the mounting hole.

In the foregoing technical solution, the annular protrusion is a rotary body and the central axis of the rotary body is not collinear with the central axis of the mounting hole, and the annular protrusion is in an offset state relative to the mounting hole, so that the annular protrusion can enhance a limiting effect in a circumferential direction of the insulating member. In addition, the rotary body structure is conducive to controlling manufacturing precision during production.

In some embodiments, a plurality of annular protrusions are arranged, and one of two adjacent annular protrusions is enclosed on a periphery of the other.

In the foregoing technical solution, annular protrusions are arranged on the end cover, and arrangement of the plurality of annular protrusions can enhance a limiting effect on the insulating member and further reduce a possibility of rotation of the insulating member relative to the end cover.

In some embodiments, the limiting protrusion includes a dotted protrusion and/or a strip-shaped protrusion.

In the foregoing technical solution, the dotted protrusion uses few materials, which is conducive to controlling material costs. A contact area between the strip-shaped protrusion and the insulating member is larger, which is conducive to improving a limiting effect of the first limiting portion on rotation of the insulating member. Through such arrangement in which the limiting protrusion includes the dotted protrusion and the strip-shaped protrusion, arrangement of the first limiting portion is more flexible, and material costs and a limiting effect on rotation of the insulating member can be both considered.

In some embodiments, the strip-shaped protrusion extends along a straight line, a broken line, or a curve.

In the foregoing technical solution, a manner in which the strip-shaped protrusion extends along a straight line, a broken line, or a curve can limit rotation of the insulating member relative to the end cover, and a manufacturing manner is simple, so that production difficulty can be reduced.

In some embodiments, the limiting protrusion includes a plurality of dotted protrusions, and the plurality of dotted protrusions are arranged at intervals around the mounting hole; and/or the limiting protrusion includes a plurality of strip-shaped protrusions, and the plurality of strip-shaped protrusions are arranged at intervals around the mounting hole.

In the foregoing technical solution, the plurality of dotted protrusions and/or strip-shaped protrusions are arranged, so that a limiting effect of the end cover on the insulating member can be enhanced, and a possibility of rotation of the insulating member relative to the end cover can be further reduced.

In some embodiments, the first limiting portion is arranged on the electrode terminal.

In the foregoing technical solution, cooperation between the first limiting portion and the second limiting portion on the insulating member can enhance connection stability between the insulating member and the electrode terminal, to reduce a possibility of rotation of the insulating member relative to the end cover.

In some embodiments, the insulating member is provided with a through hole, the electrode terminal is arranged through the through hole, the first limiting portion is arranged on an outer peripheral surface of the electrode terminal, and the second limiting portion is arranged on a hole wall of the through hole.

In the foregoing technical solution, the first limiting portion is arranged on the outer peripheral surface of the electrode terminal, the second limiting portion is arranged on the hole wall of the through hole of the insulating member, so that cooperation between the first limiting portion and the second limiting portion can reduce a risk of rotation of the insulating member relative to the electrode terminal, sealing performance between the insulating member and the electrode terminal is improved, sealing performance between the insulating member and the end cover is improved, a leakage risk of an electrolyte solution is reduced, and reliability of a battery cell is improved.

In some embodiments, a plurality of second limiting portions are arranged, and the plurality of second limiting portions are arranged at intervals along a circumferential direction of the through hole.

In the foregoing technical solution, the plurality of second limiting portions can further improve a limiting effect on the insulating member, so that a risk of rotation of the insulating member relative to the end cover is reduced.

According to a second aspect, an embodiment of the present application provides an end cover, where the end cover is provided with a first limiting portion, and the first limiting portion is configured to cooperate with an insulating member and limit rotation of the insulating member relative to the end cover.

According to a third aspect, an embodiment of the present application provides a battery cell, where the battery cell includes a shell, and the end cover assembly according to any embodiment of the first aspect or the end cover according to any embodiment of the second aspect; and the shell, where the shell has an opening, and the end cover covers the opening.

According to a fourth aspect, an embodiment of the present application provides a battery, where the battery includes the battery cell according to any embodiment of the second aspect.

According to a fifth aspect, an embodiment of the present application provides an electric device, where the electric device includes the battery cell according to any embodiment of the second aspect or the battery according to any embodiment of the second aspect, and the battery cell or the battery is configured to supply power to the electric device.

### BRIEF DESCRIPTION OF THE DRAWINGS

To describe the technical solutions of the embodiments of the present application more clearly, the following briefly introduces the accompanying drawings required to be used in the embodiments. It should be understood that the accompanying drawings in the following description show only some embodiments of the present application and therefore should not be regarded as limiting the scope, and a person of ordinary skill in the art may still derive other accompanying drawings from these accompanying drawings without creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a schematic structural diagram of an end cover assembly according to some embodiments of the present application;
FIG. 5 is a schematic structural diagram of an end cover assembly according to some other embodiments of the present application;
FIG. 6 is a partial cross-sectional view along a line C-C in FIG. 5 according to some embodiments of the present application;
FIG. 7 is an enlarged view at a position A in FIG. 6;
FIG. 8 is a schematic structural diagram of an end cover according to some embodiments of the present application;
FIG. 9 is a schematic structural diagram of an end cover according to some other embodiments of the present application;
FIG. 10 is a schematic structural diagram of an end cover according to still some other embodiments of the present application;
FIG. 11 is a schematic structural diagram of an end cover according to yet some other embodiments of the present application;
FIG. 12 is a schematic structural diagram of an end cover according to yet some other embodiments of the present application; and
FIG. 13 is a schematic structural diagram of an electrode terminal provided with a first limiting portion according to some embodiments of the present application.

Reference numerals: 111-End cover; 1111-Mounting hole; 1112-First limiting portion; 1113-Liquid injection hole; 112-Electrode terminal; 113-Insulating member; 1131-Second limiting portion; 1132-Through hole; 114-Pressure relief mechanism; 10-Battery cell; 11-End cover assembly; 12-Shell; 13-Electrode assembly; 100-Battery; 20-Box; 21-First part; 22-Second part; 23-Accommodating space; 1000-Vehicle; 200-Motor; and 300-Controller.

### DETAILED DESCRIPTION

To make the objectives, technical solutions, and advantages of embodiments of the present application clearer, the following clearly describes the technical solutions in the embodiments of the present application with reference to the accompanying drawings in the embodiments of the present application. Apparently. the described embodiments are merely some rather than all of the embodiments of the present application. All other embodiments obtained by a person of ordinary skill in the art based on the embodiments of the present application without making creative efforts shall fall within the protection scope of the present application.

Unless otherwise defined, meanings of all technical and scientific terms used in the present application are the same as those usually understood by a person skilled in the art to which the present application belongs. In the present application, the terms used in the specification of the present application are merely intended to describe objectives of specific embodiments, but are not intended to limit the present application. The terms "include", "have", and any variant thereof in the specification and the claims of the present application and the description of the accompanying drawings are intended to cover non-exclusive inclusion. In the specification, claims, or accompanying drawings of the present application, the terms "first", "second", and the like are intended to distinguish different objects but do not describe a specific order or primary-secondary relationship.

Reference to "an embodiment" in the present application means that specific features, structures, or characteristics described with reference to the embodiment may be included in at least one embodiment of the present application. The term appearing at different positions of the description may not necessarily refer to the same embodiment or an independent or alternative embodiment that is mutually exclusive with another embodiment.

In the description of the present application, it should be noted that, unless otherwise explicitly specified or defined, the terms such as "mount", "connect", and "connection" should be understood in a broad sense. For example, the connection may be a fixed connection, a detachable connection, or an integral connection; or the connection may be a direct connection, an indirect connection through an intermediary, or internal communication between two elements. For a person of ordinary skill in the art, specific meanings of the foregoing terms in the present application can be understood according to specific situations.

The term "and/or" in the present application merely describes an association relationship of associated objects, and indicates that there may be three relationships. For example, A and/or B may indicate three cases: Only A exists, both A and B exist, and only B exists. In addition, in the present application, the character "/" usually indicates an "or" relationship between the associated objects.

In the embodiments of the present application, same reference numerals represent same components, and for brevity, detailed description of the same components is omitted in different embodiments. It should be understood that the thickness, length, width, and other dimensions of various components in the embodiments of the present application shown in the accompanying drawings, as well as the overall thickness, length, width, and other dimensions of an integrated apparatus are for illustrative purposes only, and should not constitute any limitation to the present application.

In the present application, the term "a plurality of" means two or more (including two).

In the present application, a battery cell may include, but not limited to, a lithium-ion secondary battery, a lithium-ion primary battery, a lithium-sulfur battery, a sodium-lithium-ion battery, a sodium-ion battery, or a magnesium-ion battery. The battery cell may be cylindrical, flat, cuboid, or in other shapes, but is not limited thereto. Generally, the battery cell includes, but not limited to, according to an encapsulation manner: a cylindrical battery cell, a prismatic battery cell, and a soft package battery cell.

A battery mentioned in the embodiments of the present application is a single physical module including one or more battery cells to provide a higher voltage and a higher capacity. For example, the battery mentioned in the present application may include a battery module, a battery pack, or the like. The battery generally includes a box for encapsulating the one or more battery cells. The box can prevent liquid or other foreign objects from affecting charging or discharging of the battery cell.

The battery cell includes an electrode assembly and an electrolyte solution, where the electrode assembly includes a positive electrode plate, a negative electrode plate, and a separator. The battery cell works mainly relying on movement of metal ions between the positive electrode plate and the negative electrode plate. The positive electrode plate includes a positive electrode current collector and a positive electrode active substance layer. A surface of the positive electrode current collector is coated with the positive electrode active substance layer. A part of the positive electrode current collector that is not coated with the positive electrode active substance layer protrudes out of a part of the positive electrode current collector that is coated with the positive electrode active substance layer. The part of the positive electrode current collector that is not coated with the positive electrode active substance layer serves as a positive electrode tab. By using a lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer. A surface of the negative electrode current collector is coated with the negative electrode active substance layer. A part of the negative electrode current collector that is not coated with the negative electrode active substance layer protrudes from a part of the negative electrode current collector that is coated with the negative electrode active substance layer. The part of the negative electrode current collector that is not coated with the negative electrode active substance layer serves as a negative electrode tab. A material of the negative electrode current collector may be copper, and a negative electrode active substance may be carbon, silicon, or the like. To ensure that no fusing occurs when a large current passes through, there are a plurality of positive electrode tabs and the positive electrode tabs are stacked, and there are a plurality of negative electrode tabs and the negative electrode tabs are stacked. A material of the separator may be polypropylene (PP), polyethylene (PE), or the like. In addition, the electrode assembly may be a winding type structure or a stacked structure, which is not limited in the embodiments of the present application.

For the development of a battery technology, design factors in many aspects, for example, performance parameters such as an energy density, a cycle life, a discharge capacity, and a charge-discharge rate need to be considered simultaneously, and reliability of the battery also needs to be considered.

The battery cell includes an end cover assembly, a shell, and an electrode assembly, where the end cover assembly generally includes an end cover, an electrode terminal, and an insulating member, and the end cover is provided with a mounting through hole, for lead the electrode terminal out of the battery cell. Upper rubber needs to be arranged between the electrode terminal and the end cover for insulation, and the electrode terminal and the end cover are fixed together while the upper rubber is formed through injection molding in an injection molding manner for insulation. The upper rubber not only plays an insulating function but also plays a connection function between the electrode terminal and the end cover.

Connection strengths between a rubber member and the electrode terminal and the end cover are weak. As a result, the rubber member more easily rotates relative to the end cover, rotation of the rubber member leads to a decrease in the connection strength between the rubber member and the electrode terminal and rotation of the rubber member relative to the electrode terminal, and rotation of the rubber member relative to the electrode terminal leads to failure of sealing between the end cover and the electrode terminal. Consequently, the electrolyte solution in the battery cell flows to a side of the end cover facing away from the inside of the battery cell after exuding from an electrode lead-out hole or moisture outside the battery cell penetrates to the inside of the battery cell, affecting the reliability of the battery cell.

In view of this, to resolve the problem of a decrease in the reliability of the battery cell caused by rotation of the upper rubber relative to the end cover, an embodiment of the present application provides a technical solution, in which a first limiting portion is arranged on the end cover or the electrode terminal, a second limiting portion is arranged on the upper rubber, and the first limiting portion cooperates with the second limiting portion to limit rotation of the insulating member relative to the end cover, thereby improving the reliability of the battery cell.

The technical solution described in this embodiment of the present application is applicable to a battery and an electric device using the battery.

The electric device may be a vehicle, a mobile phone, a portable device, a notebook computer, a ship, a spacecraft, an electric toy, or an electric tool. The vehicle may be a fuel powered vehicle, a gas powered vehicle, or a new energy vehicle. The new energy vehicle may be a pure electric vehicle, a hybrid electric vehicle, or an extended range vehicle. The spacecraft includes an airplane, a rocket, a space shuttle, or a space ship. The electric toy includes a fixed or mobile electric toy, such as a game console, an electric vehicle toy, an electric ship toy, or an electric airplane toy. The electric tool includes an electric metal cutting tool, an electric grinding tool, an electric assembling tool, and a power tool for use in railways, such as an electric drill, an electric grinder, an electric wrench, an electric screwdriver, an electric hammer, an electric impact drill, a concrete vibrator, or an electrical planer.

For ease of description, the following embodiments are described by using an example in which the electric device is a vehicle.

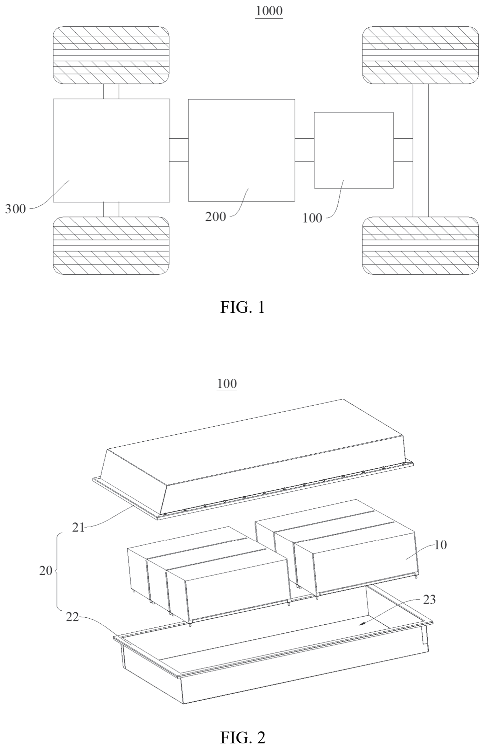

Referring to FIG. 1, FIG. 1 is a schematic structural diagram of a vehicle 1000 according to some embodiments of the present application. A battery 100 is arranged inside the vehicle 1000, and the battery 100 may be arranged at the bottom, head, or tail of the vehicle 1000. The battery 100 may be configured to supply power to the vehicle 1000. For example, the battery 100 may be used as an operating power supply of the vehicle 1000.

The vehicle 1000 may further include a controller 300 and a motor 200. The controller 300 is configured to control the battery 100 to supply power to the motor 200, for example, to meet operating electricity requirements during starting, navigation, and traveling of the vehicle 1000.

In some embodiments of the present application, the battery 100 can not only be used as the operating power supply of the vehicle 1000, but can also be used as a driving power supply of the vehicle 1000, to alternatively or partially replace fuel or natural gas to provide driving power for the vehicle 1000.

In some embodiments, referring to FIG. 2, FIG. 2 is an exploded view of a battery 100 according to some embodiments of the present application. The battery 100 includes a plurality of battery cells 10. The plurality of battery cells 10 may be connected in series, in parallel, or in a series-parallel connection. The series-parallel connection means that the plurality of battery cells 10 are connected in series and connected in parallel.

In some embodiments, the battery 100 may further include a bus component (not shown in the figure), and the plurality of battery cells 10 may be electrically connected through the bus component, to implement a series connection, a parallel connection, or a series-parallel connection among the plurality of battery cells 10.

The bus component may be a metal conductor, for example, copper, iron, aluminum, steel, or an aluminum alloy.

In some embodiments, the battery 100 may further include a box 20, and the box 20 is configured to accommodate the battery cells 10. The box 20 may include a first part 21 and a second part 22, and the first part 21 and the second part 22 cover each other, to define an accommodating space 23 for accommodating the battery cells 10. Certainly, a joint between the first part 21 and the second part 22 may be sealed by a sealing element (not shown in the figure), and the sealing element may be a sealing ring, a sealing adhesive, or the like.

The first part 21 and the second part 22 may be in various shapes, for example, a cuboid or a cylinder. The first part 21 may be a hollow structure open on one side, and the second part 22 may also be a hollow structure open on one side. The open side of the second part 22 covers the open side of the first part 21, so that the box 20 having the accommodating space 23 is formed. Certainly, the first part 21 may alternatively be a hollow structure open on one side, and the second part 22 may alternatively be a plate-shaped structure. The second part 22 covers the open side of the first part 21, so that the box 20 having the accommodating space 23 is formed.

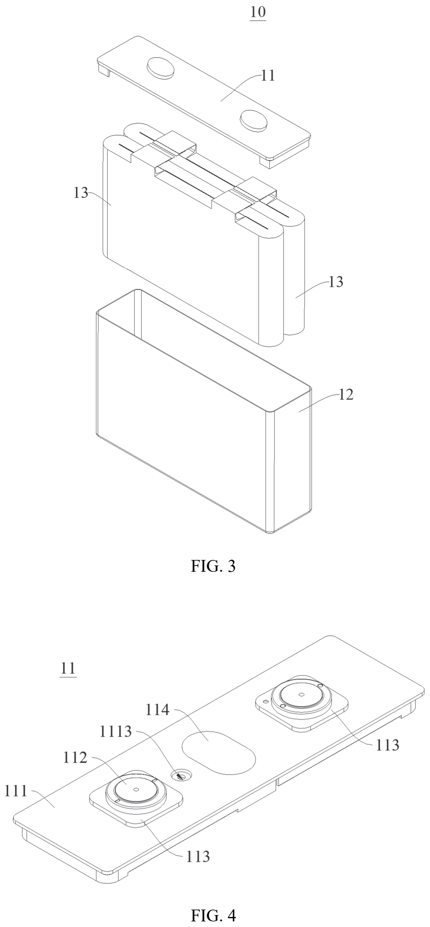

Referring to FIG. 3, FIG. 3 is an exploded view of a battery cell 10 according to some embodiments of the present application. The battery cell 10 may include a shell 12, an electrode assembly 13, an end cover 111, and other functional components.

The shell 12 is a component configured to accommodate the electrode assembly 13. The shell 12 may be a hollow structure provided with an opening at an end, or the shell 12 may be a hollow structure provided with openings at two ends. The shell 12 may be made of various materials, for example, copper, iron, aluminum, steel, or aluminum alloy. The shell 12 may be in various shapes, for example, a cylinder or a cuboid. For example, in FIG. 3, the shell 12 is a cuboid.

The end cover 111 is a component covering the opening of the shell 12 to isolate an internal environment of the battery cell 10 from an external environment. The end cover 111 covers the opening of the shell 12, and the end cover 111 and the shell 12 jointly define a sealing space for accommodating the electrode assembly 13, an electrolyte solution, and the other functional components. A shape of the end cover 111 may match the shape of the shell 12. For example, the shell 12 is a cuboid structure, and the end cover 111 is a rectangular plate-shaped structure matching the shell 12. For another example, the shell 12 is a cylindrical structure, and the end cover 111 is a circular plate-shaped structure matching the shell 12. The end cover 111 may also be made of various materials. For example, the end cover 111 may be made of a metal material, for example, copper, iron, aluminum, steel, or aluminum alloy. The material of the end cover 111 and the material of the shell 12 may be the same or may be different.

In the battery cell 10, there may be one or two end covers 111. If the shell 12 is a hollow structure provided with an opening at an end, one end cover 111 is correspondingly arranged. If the shell 12 is a hollow structure provided with openings at two ends, two end covers 111 are correspondingly arranged, and the two end covers 111 respectively cover the two openings of the shell 12.

Referring to FIG. 4, FIG. 4 is a schematic structural diagram of an end cover assembly 11 according to some embodiments of the present application. The end cover assembly 11 includes an end cover 111, an electrode terminal 112, and a pressure relief mechanism 114. The end cover 111 is provided with a liquid injection hole 1113, and the pressure relief mechanism 114 is mounted on the end cover 111. Two electrode terminals 112 with opposite polarities may be mounted on the end cover 111, which is applicable to a technical solution in which tabs come out from a same side. Alternatively, one electrode terminal 112 may be mounted on the end cover 111, which is applicable to a technical solution in which tabs come out from a single side. For ease of description, the embodiments of the present application are described by using an end cover 111 on which two electrode terminals 112 are mounted that is applicable to tabs coming out from two sides as an example.

The pressure relief mechanism 114 is an element or component actuated when an internal pressure or temperature of the battery cell 10 reaches a threshold, to relieve the internal pressure or temperature. The pressure relief mechanism 114 may be in the form of an anti-explosion valve, an air valve, a pressure relief valve, or a safety valve, and may specifically use a pressure-sensitive or temperature-sensitive element or structure. That is, when the internal pressure or temperature of the battery cell 10 reaches a predetermined threshold, the pressure relief mechanism 114 performs an action or a weak structure arranged in the pressure relief mechanism 114 is damaged, to form an opening or channel for releasing the internal pressure or temperature.

An embodiment of the present application provides an end cover assembly 11, which can alleviate the problem of rotation of the upper rubber relative to the end cover 111. The following describes a specific structure of the end cover assembly 11 in detail with reference to the accompanying drawings.

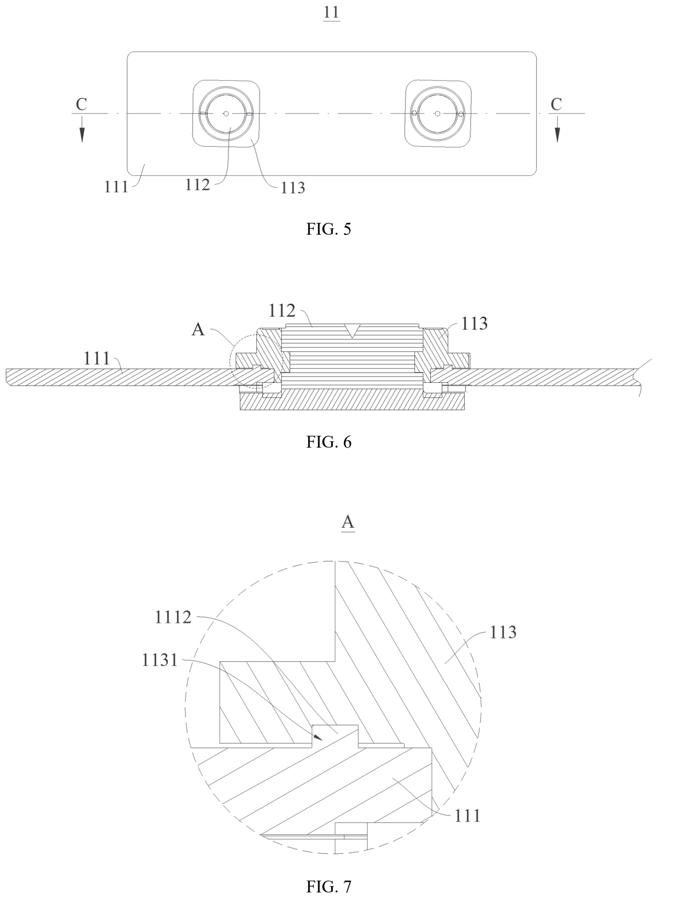

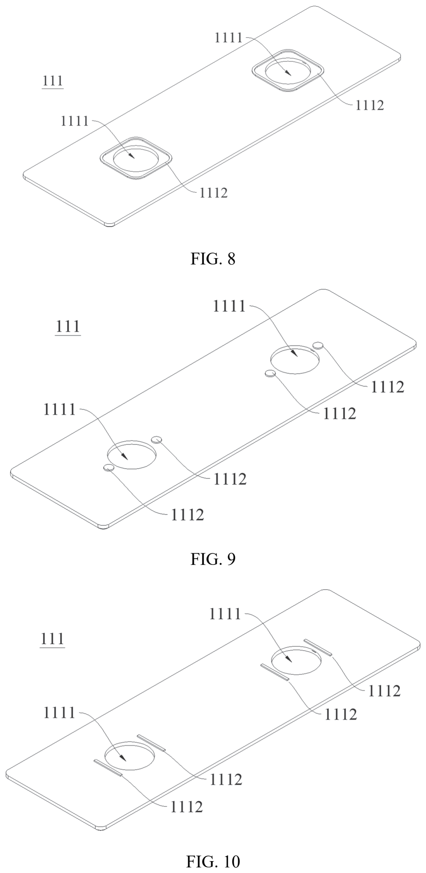

Referring to FIG. 5, FIG. 6, and FIG. 7, FIG. 5 is a schematic structural diagram of an end cover assembly 11 according to some other embodiments of the present application; FIG. 6 is a partial cross-sectional view along a line C-C in FIG. 5 according to some embodiments of the present application; FIG. 7 is an enlarged view at a position A in FIG. 6; and FIG. 8 is a schematic structural diagram of an electrode terminal 112 provided with a first limiting portion 1112 according to some embodiments of the present application.

An embodiment of the present application provides an end cover assembly 11, where the end cover assembly 11 includes an end cover 111, and the end cover 111 is provided with a mounting hole 1111. The electrode terminal 112 is at least partially mounted in the mounting hole 1111. An insulating member 113 is at least partially located in the mounting hole 1111, and the insulating member 113 is at least partially arranged between the electrode terminal 112 and the end cover 111, to insulate and isolate the electrode terminal 112 from the end cover 111. The end cover 111 and/or the electrode terminal 112 are provided with a first limiting portion 1112, the insulating member 113 is provided with a second limiting portion 1131, and the first limiting portion 1112 and the second limiting portion 1131 cooperate with each other to limit rotation of the insulating member 113 relative to the end cover 111 and/or the electrode terminal 112.

The mounting hole 1111 is a lead-out hole provided on the end cover 111 for leading out the electrode terminal 112. The mounting hole 1111 is a through hole, and the mounting hole 1111 penetrates an inner surface and an outer surface of the end cover 111 along a thickness direction of the end cover 111, where the inner surface of the end cover 111 is a surface facing the inside of the battery cell 10 during use of the end cover 111, and the outer surface of the end cover 111 is a surface facing the outside of the battery cell 10 during use of the end cover 111.

The insulating member 113 may be upper rubber, the insulating member 113 is at least partially located in the mounting hole 1111, and the insulating member 113 is at least partially arranged between the electrode terminal 112 and the end cover 111 to play an insulating function, thereby reducing a short circuit risk between the electrode terminal 112 and the end cover 111.

The insulating member 113 is provided with the second limiting portion 1131, and the second limiting portion 1131 may be a concave-convex structure deliberately arranged on the insulating member 113. Certainly, a part of the insulating member 113 may alternatively be used as the second limiting portion 1131. For example, a part of a corner of the insulating member 113 is used as the second limiting portion 1131. In this way, there may be no need to additionally arrange the concave-convex structure on the insulating member 113.

The first limiting portion 1112 is a limiting structure cooperating with the second limiting portion 1131 to limit rotation of the insulating member 113 relative to the end cover 111, limiting the insulating member 113 refers to causing the insulating member 113 not to rotate or causing the insulating member 113 not easy to rotate. The first limiting portion 1112 may be arranged on the end cover 111 (as shown in FIG. 7) or may be arranged on the electrode terminal 112 (mentioned above). Certainly, the first limiting portion 1112 may be respectively arranged on the end cover 111 and the electrode terminal 112, that is, a limiting structure cooperating with the insulating member 113 is respectively arranged on the end cover 111 and the electrode terminal 112.

In this embodiment, the first limiting portion 1112 is arranged on the end cover 111 and/or the electrode terminal 112, and the first limiting portion 1112 cooperates with the second limiting portion 1131 on the insulating member 113, so that a risk of rotation of the insulating member 113 relative to the end cover 111 can be reduced, sealing performance between the insulating member 113 and the end cover 111 can be improved, sealing performance between the insulating member 113 and the electrode terminal 112 can be improved, a leakage risk of an electrolyte solution can be reduced, and reliability of a battery cell 10 can be improved.

The first limiting portion 1112 and the second limiting portion 1131 may alternatively be in the form of cooperation between a protrusion and a groove, where the protrusion is engaged into the groove, so that rotation of the insulating member 113 relative to the end cover 111 is limited.

In some embodiments, at least a part of one of the first limiting portion 1112 and the second limiting portion 1131 is a limiting protrusion, and at least a part of the other is a limiting groove.

That is, it may be that at least a part of the first limiting portion 1112 is a limiting protrusion and at least a part of the second limiting portion 1131 is a limiting groove. Alternatively, it may be that at least a part of the first limiting portion 1112 is a limiting groove and at least a part of the second limiting portion 1131 is a limiting groove.

In an embodiment in which at least a part of the first limiting portion 1112 is a limiting protrusion, it may be that the whole first limiting portion 1112 is a protrusion or a part of the first limiting portion is a protrusion. In this case, the first limiting portion may include another limiting structure, for example, a concave point. In an embodiment in which at least a part of the second limiting portion 1131 is a limiting protrusion, it may be that the whole second limiting portion 1131 is a protrusion or a part of the second limiting portion is a protrusion. In this case, the second limiting portion 1131 may include another structure, for example, a concave point.

Similarly, in an embodiment in which at least a part of the first limiting portion 1112 is a limiting groove, it may be that the whole first limiting portion 1112 is a groove or a part of the first limiting portion is a groove. In this case, the first limiting portion 1112 may include another limiting structure, for example, a convex point. In an embodiment in which at least a part of the second limiting portion 1131 is a limiting groove, it may be that the whole second limiting portion 1131 is a groove or a part of the second limiting portion is a groove. In this case, the second limiting portion 1131 may include another structure, for example, a convex point.

The first limiting portion 1112 and the second limiting portion 1131 cooperate with each other in the form of a limiting protrusion and a limiting groove, where the protrusion is engaged into the groove, so that a structure is simple, and production and manufacturing are facilitated.

It should be understood that, cooperation between a protrusion and a groove is an example of an implementation of cooperation between the first limiting portion 1112 and the second limiting portion 1131. The first limiting portion 1112 and the second limiting portion 1131 may alternatively cooperate with each other in another manner. For example, the first limiting portion 1112 and the second limiting portion 1131 may be hook structures with opposite reverse directions, to limit rotation of the insulating member 113 relative to the end cover 111. For another example, the first limiting portion 1112 and the second limiting portion 1131 may alternatively be strip-shaped structures such as rubber strips, where one rubber strip is arranged on the end cover 111, the other rubber strip is arranged on the insulating member 113, and the two rubber strips are connected in a cooperation and winding manner, so that positions of the insulating member 113 and the end cover 111 are relatively fixed, thereby limiting rotation of the insulating member 113 relative to the end cover 111.

In some embodiments, the first limiting portion 1112 is a limiting protrusion, and the second limiting portion 1131 is a limiting groove. That is, a limiting protrusion is arranged on the end cover 111 and/or the electrode terminal 112, and a limiting groove is provided on the insulating member 113.

A limiting protrusion is arranged on the end cover 111 and/or the electrode terminal 112, so that rotation of the insulating member 113 can be limited, and structural strengths of the end cover 111 and/or the electrode terminal 112 can be enhanced.

In some embodiments, the first limiting portion 1112 is arranged on the end cover 111.

That is, the end cover 111 cooperates through the first limiting portion 1112 with the second limiting portion 1131 on the insulating member 113 to limit rotation of the insulating member 113.

Referring to FIG. 6, in some embodiments, the first limiting portion 1112 is arranged on the outer surface of the end cover 111.

Compared with arranging the first limiting portion 1112 at another position of the end cover 111, arranging the first limiting portion 1112 on the outer surface of the end cover 111 can facilitate processing and forming of the first limiting portion 1112, and can reduce impact of the first limiting portion 1112 on an internal structure of the battery cell 10.

Referring to FIG. 8, FIG. 8 is a schematic structural diagram of an end cover 111 according to some embodiments of the present application. In some embodiments, the limiting protrusion includes an annular protrusion arranged around the mounting hole 1111, and the annular protrusion is a non-rotary body.

The limiting protrusion may be a closed annular protrusion. Certainly, existence of a specific notch is also allowed. That is, the limiting protrusion may be an annular protrusion that is not completely closed.

The annular protrusion may include, but not limited to, a rectangular ring, a diamond ring, a triangular ring, or an elliptical ring, and annular protrusions in these shapes have a corner and are of a symmetrical structure, where the symmetrical structure is conducive to controlling manufacturing precision during production, and the corner is conducive to limiting the insulating member 113 in a circumferential direction to enhance a limiting effect on the insulating member 113.

The annular protrusion being a non-rotary body means that the annular protrusion is a non-circular structure. For example, an inner ring of the annular protrusion may be a non-circle, or an outer ring of the annular protrusion is a non-circle. Certainly, both the inner ring and the outer ring of the annular protrusion are non-circles. The inner ring of the annular protrusion is a surface of the annular protrusion facing the electrode terminal 112, and the outer ring of the annular protrusion is a surface of the annular protrusion facing away from the electrode terminal 112.

The limiting protrusion includes the annular protrusion arranged around the mounting hole 1111 and the annular protrusion is a non-rotary body, which brings an advantage that rotation of the insulating member 113 can be more effectively limited by setting the annular protrusion to a non-rotary body.

In some embodiments, the limiting protrusion includes an annular protrusion arranged around the mounting hole 1111, the annular protrusion is a rotary body, and a central axis of the rotary body is not collinear with a central axis of the mounting hole 1111.

The central axis of the rotary body is not collinear with the central axis of the mounting hole 1111. That is, the rotary body is arranged in an offset manner relative to the mounting hole 1111.

The annular protrusion may be a closed rotary body. For example, the rotary body is a closed circle. Certainly, existence of a specific notch is also allowed. That is, the annular protrusion is a rotary body that is not completely closed.

The insulating member 113 is mounted in the mounting hole 1111 and a rotation center of the insulating member 113 is a center of the mounting hole 1111, if the central axis of the rotary body is collinear with the central axis of the mounting hole 1111, a limiting degree of the rotary body in the circumferential direction of the insulating member 113 is weak. Therefore, the annular protrusion is a rotary body and the central axis of the rotary body is not collinear with the central axis of the mounting hole 1111, and the annular protrusion is in an offset state relative to the mounting hole 1111, so that a limiting effect in the circumferential direction of the insulating member 113 can be enhanced.

In addition, the annular protrusion being a rotary body also facilitates production and manufacturing, and since the rotary body being a symmetrical structure is conducive to controlling manufacturing precision during production.

In some embodiments, an annular protrusion is arranged on the end cover 111, and a plurality of annular protrusions are arranged, where one of two adjacent annular protrusions is enclosed on a periphery of the other.

"A plurality of" herein means two or more.

The plurality of annular protrusions may be arranged to form a concentric ring.

Annular protrusions are arranged on the end cover 111, and arrangement of the plurality of annular protrusions can enhance a limiting effect on the insulating member 113 and further reduce a possibility of rotation of the insulating member 113 relative to the end cover 111.

Referring to FIG. 9, FIG. 10, FIG. 11, and FIG. 12, FIG. 9 is a schematic structural diagram of an end cover 111 according to some other embodiments of the present application;

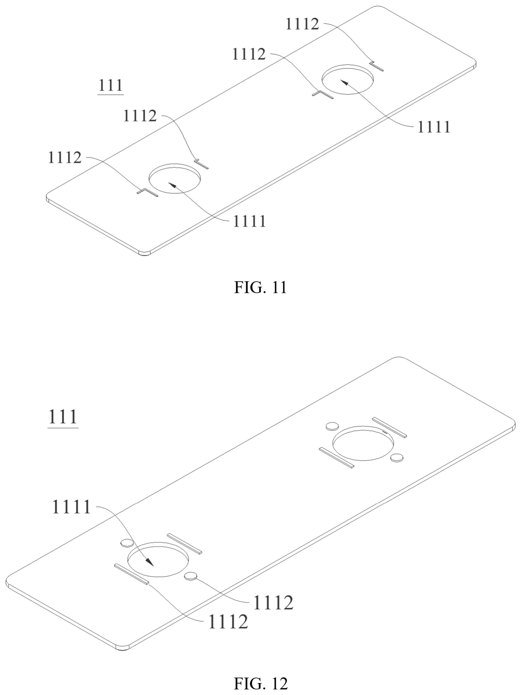

FIG. 10 is a schematic structural diagram of an end cover 111 according to still some other embodiments of the present application; FIG. 11 is a schematic structural diagram of an end cover 111 according to yet some other embodiments of the present application; and FIG. 12 is a schematic structural diagram of an end cover 111 according to still some other embodiments of the present application.

In some embodiments, the limiting protrusion includes a dotted protrusion and/or a strip-shaped protrusion.

As shown in FIG. 9, the limiting protrusion is a dotted protrusion. It should be understood that, the dotted protrusion may be a dot, or may be an elliptic dot or another special-shaped dotted structure. The limiting protrusion is a dotted protrusion, and the dotted protrusion use few materials, which is conducive to controlling material costs.

As shown in FIG. 10 and FIG. 11, the limiting protrusion is a strip-shaped protrusion. Compared with a dotted protrusion, a contact area between the strip-shaped protrusion and the insulating member 113 is larger, which is conducive to improving a limiting effect of the first limiting portion 1112 on rotation of the insulating member 113.

As shown in FIG. 12, the limiting protrusion includes dotted protrusions and strip-shaped protrusions, and the dotted protrusions and the strip-shaped protrusions may be alternately arranged around the mounting hole 1111, or one strip-shaped protrusion may be arranged at an interval of two dotted protrusions, or the strip-shaped protrusions are arranged on one side and the dotted protrusions are arranged on the other side of the mounting hole 1111. Through such arrangement in which the limiting protrusion includes the dotted protrusions and the strip-shaped protrusions, arrangement of the first limiting portion 1112 is more flexible. Through such arrangement, material costs and a limiting effect on rotation of the insulating member 113 can be both considered.

Referring to FIG. 10 and FIG. 11, in some embodiments, the strip-shaped protrusion extends along a straight line, a broken line, or a curve.

The strip-shaped protrusion includes, but not limited to, a straight line (as shown in FIG. 10), a broken line, an L-shaped curve (as shown in FIG. 11), a U-shaped curve, or an S-shaped curve.

A manner in which the strip-shaped protrusion extends along a straight line, a broken line, or a curve can limit rotation of the insulating member 113 relative to the end cover 111, and a manufacturing manner is simple, so that production difficulty can be reduced.

In some embodiments, the limiting protrusion includes a plurality of dotted protrusions, and the plurality of dotted protrusions are arranged at intervals around the mounting hole 1111; and/or the limiting protrusion includes a plurality of strip-shaped protrusions, and the plurality of strip-shaped protrusions are arranged at intervals around the mounting hole 1111.

As shown in FIG. 9, two dotted protrusions are arranged, and the two dotted protrusions are arranged on two sides of the mounting hole 1111. Certainly, in other embodiments, a quantity of the dotted protrusions may be three, four, or the like.

As shown in FIG. 10 and FIG. 11, two strip-shaped protrusions are arranged, and the two strip-shaped protrusions are arranged on two sides of the mounting hole 1111. Certainly, in other embodiments, a quantity of the strip-shaped protrusions may be three, four, or the like.

As shown in FIG. 12, the dotted protrusions and the strip-shaped protrusions are alternately arranged around the mounting hole 1111. Certainly, in other embodiments, one strip-shaped protrusion may be arranged at an interval of two dotted protrusions, or a plurality of strip-shaped protrusions are arranged on one side and a plurality of dotted protrusions are arranged on the other side of the mounting hole 1111.

The plurality of dotted protrusions and/or strip-shaped protrusions are arranged, so that a limiting effect of the end cover 111 on the insulating member 113 can be enhanced, and a possibility of rotation of the insulating member 113 relative to the end cover 111 can be further reduced.

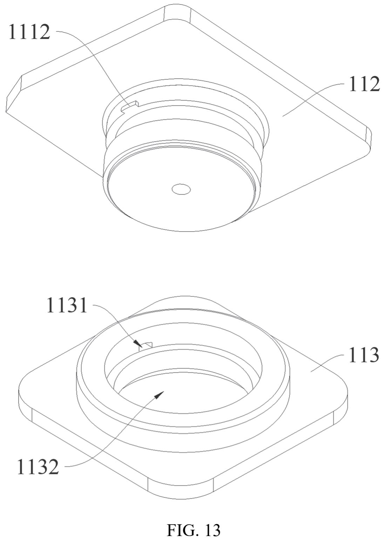

Referring to FIG. 13, FIG. 13 is a schematic structural diagram of an electrode terminal 112 provided with a first limiting portion 1112 according to some embodiments of the present application. In some embodiments, the first limiting portion 1112 is arranged on the electrode terminal 112. The first limiting portion 1112 cooperates with the second limiting portion 1131 on the insulating member 113 to reduce a possibility of rotation of the insulating member 113 relative to the end cover 111.

Still referring to FIG. 13, in some embodiments, the insulating member 113 is provided with a through hole 1132, the electrode terminal 112 is arranged through the through hole 1132, the first limiting portion 1112 is arranged on an outer peripheral surface of the electrode terminal 112, and the second limiting portion 1131 is arranged on a hole wall of the through hole 1132.

As shown in FIG. 13, the first limiting portion 1112 is a limiting protrusion arranged on the outer peripheral surface of the electrode terminal 112, and the second limiting portion 1131 is a limiting groove provided on a hole wall of the insulating member 113. Certainly, in other embodiments, a limiting groove may be provided on the outer peripheral surface of the electrode terminal 112, and a limiting protrusion is correspondingly arranged on a hole wall of the insulating member 113.

The first limiting portion 1112 is arranged on the outer peripheral surface of the electrode terminal 112, the second limiting portion 1131 is arranged on the hole wall of the through hole 1132 of the insulating member 113, so that cooperation between the first limiting portion 1112 and the second limiting portion 1131 can reduce a risk of rotation of the insulating member 113 relative to the electrode terminal 112, sealing performance between the electrode terminal 112 and the insulating member 113 is improved, sealing performance between the end cover 111 and the insulating member 113 is improved, a leakage risk of an electrolyte solution is reduced, and reliability of a battery cell 10 is improved.

In some embodiments, a plurality of second limiting portions 1131 are arranged, and the plurality of second limiting portions 1131 are arranged at intervals along a circumferential direction of the through hole 1132. The plurality of second limiting portions 1131 can further improve a limiting effect on the insulating member 113, so that a risk of rotation of the insulating member 113 relative to the end cover 111 is reduced.

An embodiment of the present application further provides an end cover 111, where the end cover 111 is provided with a first limiting portion 1112, and the first limiting portion 1112 is configured to cooperate with an insulating member 113 and limit rotation of the insulating member 113 relative to the end cover 111.

An embodiment of the present application further provides a battery cell 10, where the battery cell 10 includes a shell 12, and the end cover assembly 11 according to any of the foregoing embodiments or the end cover 111 according to any one of the foregoing embodiments; and the shell 12, where the shell 12 has an opening, and the end cover 111 covers the opening.

An embodiment of the present application further provides a battery 100, where the battery 100 includes the battery cell 10 according to any one of the foregoing embodiments.

An embodiment of the present application further provides an electric device, where the electric device includes the battery cell 10 according to any one of the foregoing embodiments or the battery 100 according to the embodiments of the second aspect, and the battery cell 10 or the battery 100 is configured to supply power to the electric device.

An embodiment of the present application further provides an end cover assembly 11. The end cover assembly 11 includes an end cover 111, an insulating member 113, and an electrode terminal 112, where the end cover 111 is provided with a mounting hole 1111, the mounting hole 1111 penetrates the end cover 111 along a thickness direction of the end cover 111, the insulating member 113 is provided with a through hole 1132, the electrode terminal 112 is mounted in the through hole 1132, and the insulating member 113 is mounted in the mounting hole 1111, to insulate and isolate the electrode terminal 112 from the end cover 111. A limiting protrusion is arranged on an outer surface of the end cover 111, a limiting groove is provided on a periphery of the insulating member 113, and the limiting protrusion cooperates with the limiting groove to limit rotation of the insulating member 113 relative to the end cover 111.

It should be noted that, the embodiments in the present application and features in the embodiments can be mutually combined in a case without conflict.

The foregoing embodiments are merely used for describing the technical solutions of the present application and are not intended to limit the present application. For a person skilled in the art, the present application may have various modifications and changes. Any modification, equivalent replacement, and improvement made within the spirit and principle of the present application are included in the protection scope of the present application.

## Claims

1. An end cover assembly, comprising:
an end cover, provided with a mounting hole;
an electrode terminal, mounted in the mounting hole; and
an insulating member, at least partially located in the mounting hole and at least partially arranged between the electrode terminal and the end cover, to insulate and isolate the electrode terminal from the end cover, wherein
the end cover and/or the electrode terminal are provided with a first limiting portion, the insulating member is provided with a second limiting portion, and the first limiting portion and the second limiting portion cooperate with each other to limit rotation of the insulating member relative to the end cover and/or the electrode terminal.

2. The end cover assembly according to claim 1, wherein at least a part of one of the first limiting portion and the second limiting portion is a limiting protrusion, and at least a part of the other one of the first limiting portion and the second limiting portion is a limiting groove.

3. The end cover assembly according to claim 2, wherein the first limiting portion is a limiting protrusion, and the second limiting portion is a limiting groove.

4. The end cover assembly according to claim 2, wherein the first limiting portion is arranged on the end cover.

5. The end cover assembly according to claim 4, wherein the first limiting portion is arranged on an outer surface of the end cover.

6. The end cover assembly according to claim 4 or 5, wherein the limiting protrusion comprises an annular protrusion arranged around the mounting hole, and the annular protrusion is a non-rotary body.

7. The end cover assembly according to claim 6, wherein the annular protrusion is a rectangular ring, a diamond ring, a triangular ring, or an elliptical ring.

8. The end cover assembly according to claim 4 or 5, wherein the limiting protrusion comprises an annular protrusion arranged around the mounting hole, the annular protrusion is a rotary body, and a central axis of the rotary body is not collinear with a central axis of the mounting hole.

9. The end cover assembly according to any one of claims 6 to 8, wherein a plurality of annular protrusions are arranged, and one of two adjacent annular protrusions is enclosed on a periphery of the other one of the two adjacent annular protrusions.

10. The end cover assembly according to any one of claims 4 to 9, wherein the limiting protrusion comprises a dotted protrusion and/or a strip-shaped protrusion.

11. The end cover assembly according to claim 10, wherein the strip-shaped protrusion extends along a straight line, a broken line, or a curve.

12. The end cover assembly according to claim 10, wherein the limiting protrusion comprises a plurality of dotted protrusions, and the plurality of dotted protrusions are arranged at intervals around the mounting hole; and/or
the limiting protrusion comprises a plurality of strip-shaped protrusions, and the plurality of strip-shaped protrusions are arranged at intervals around the mounting hole.

13. The end cover assembly according to any one of claims 1 to 12, wherein the first limiting portion is arranged on the electrode terminal.

14. The end cover assembly according to claim 13, wherein the insulating member is provided with a through hole, the electrode terminal is arranged through the through hole, the first limiting portion is arranged on an outer peripheral surface of the electrode terminal, and the second limiting portion is arranged on a hole wall of the through hole.

15. The end cover assembly according to claim 14, wherein a plurality of second limiting portions are arranged, and the plurality of second limiting portions are arranged at intervals along a circumferential direction of the through hole.

16. An end cover, wherein the end cover is provided with a first limiting portion, and the first limiting portion is configured to cooperate with an insulating member and limit rotation of the insulating member relative to the end cover.

17. A battery cell, comprising:
the end cover assembly according to any one of claims 1 to 15 or the end cover according to claim 16; and
a shell, having an opening, wherein the end cover covers the opening.

18. A battery, comprising the battery cell according to claim 17.

19. An electric device, comprising the battery cell according to claim 17 or the battery according to claim 18, wherein the battery cell or the battery is configured to supply power to the electric device.
